# EUROPEAN PATENT APPLICATION

(11) **EP 2 876 759 A1**
(43) Date of publication of application: **27.05.2015**
(21) Application number: 13820593.5
(22) Date of filing: 18.07.2013
(51) Int. Cl.: H02G 3/30, B60R 16/02, H02G 11/00

(54) **ELECTRICAL WIRE ROUTING DEVICE**

(30) Priority: 20.07.2012 JP 2012161316
(71) Applicant: Yazaki Corporation, Minato-ku Tokyo 108-8333 (JP)
(72) Inventor: TERADA, Tomoyasu, Makinohara-shi Shizuoka 421-0407 (JP); SEKINO, Tsukasa, Makinohara-shi Shizuoka 421-0407 (JP); YAMASHITA, Hiroshi, Makinohara-shi Shizuoka 421-0407 (JP); OKAMOTO, Daisuke, Makinohara-shi Shizuoka 421-0407 (JP)
(74) Representative: Grünecker Patent- und Rechtsanwälte PartG mbB
(86) International application number: PCT/JP2013/069485
(87) International publication number: WO 2014/014048

(57) **Abstract**

The present invention provides an electric wire routing device with which the device can be reduced in size and a mounting space for the device can be reduced. The electric wire routing device includes an outer member provided in either one of a support body and a slide body, and an inner member (1) turnably supported in the outer member. An electric wire is inserted through the inner member (1). The inner member (1) is configured by combining, with each other, a pair of inner divided bodies (20) having the same shapes. The inner divided bodies (20) sandwich butt surfaces S which intersect with a first axis (A1) and which include a second axis (A2). Each of the inner divided bodies (20) includes a male lock portion (30) provided on one side of a radial direction of the device, and a female lock portion (40) provided on the other side. An engaged position of the male lock portion (30) of one inner divided body (20) and the female lock portion (40) of the other inner divided body (20) is provided closer to the one inner divided body (20) than the butt surface (S).

## Description

### Technical Field

The present invention relates to an electric wire routing device for routing an electric wire between a support body and a slide body.

### Background Art

In an automobile and the like for example, a vehicle body as a support body is slidably provided with a slide door and a slide seat as slide bodies. For example, electronic devices such as a door lock switch, a window glass opening/closing switch and a courtesy lamp are mounted on the slide door. Hence, in vehicles provided with the slide doors, various electric wire routing devices for routing electric wires between a vehicle body and a slide door are used for connecting, to each other, the electronic device mounted on the slide door and an electronic device such as a control device provided on the vehicle body. In such an electric wire routing device, to follow the sliding motion of the slide body to reduce stress on the electric wire, there is proposed to rotatably or swingably support an exterior member of the electric wire (e.g., refer to Patent Literatures 1 and 2).

A support tool described in Patent Literature 1 includes an outer member and an inner member, the inner member is rotatably supported in the outer member, an end of an external member of an electric wire is held so that the inner member rotates to follow rotation of the external member in its twisting direction. The inner member is composed of a pair of rotation dividing members having arc surfaces on their outer peripheries. The pair of rotation dividing members is assembled such that their butt surfaces butt against each other, and arc surfaces of the assembled pair of rotation dividing members form an outer peripheral slide surface. A U-shaped groove which opens toward the butt surface is formed in each of the rotation dividing members, a harness accommodating port is formed by this U-shaped groove, and the external member of the electric wire is held in a tube accommodating chamber located on an inner side of the harness accommodating port in a state where the external member is sandwiched. A pair of positioning projections is formed on the butt surface of each of the rotation dividing members such that the positioning projections integrally project from the butt surface in a staggered manner, and positioning grooves into which the positioning projections are inserted are formed in the butt surface in a staggered manner. Frame-shaped lock arms as lock means project from one side of left and right outer walls of each of the rotation dividing members, and hook-shaped to-be locked portions are provided on the other sides of the left and right outer walls. Therefore, when the pair of rotation dividing members is assembled, the positioning projections thereof are inserted into the positioning grooves, the butt surfaces butt against each other, and the lock arms are fixed to the to-be locked portions. According to this, the assembled state is fixed.

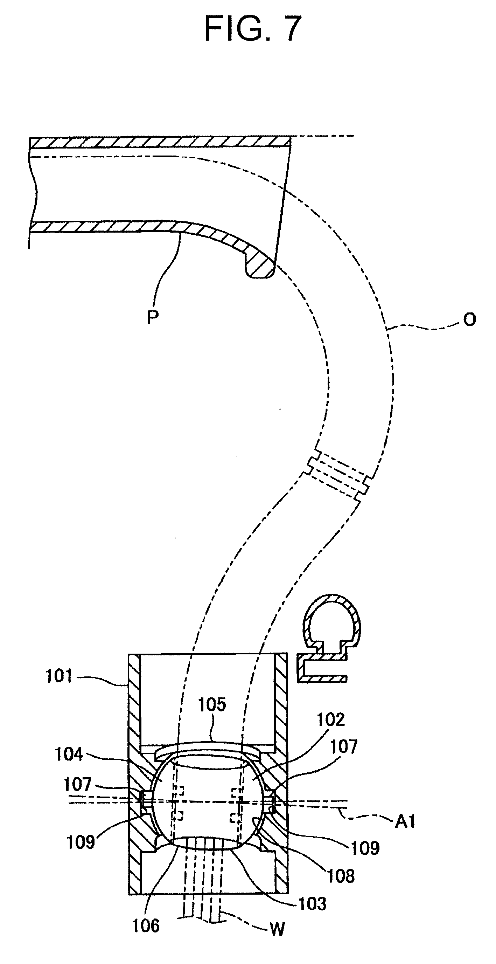

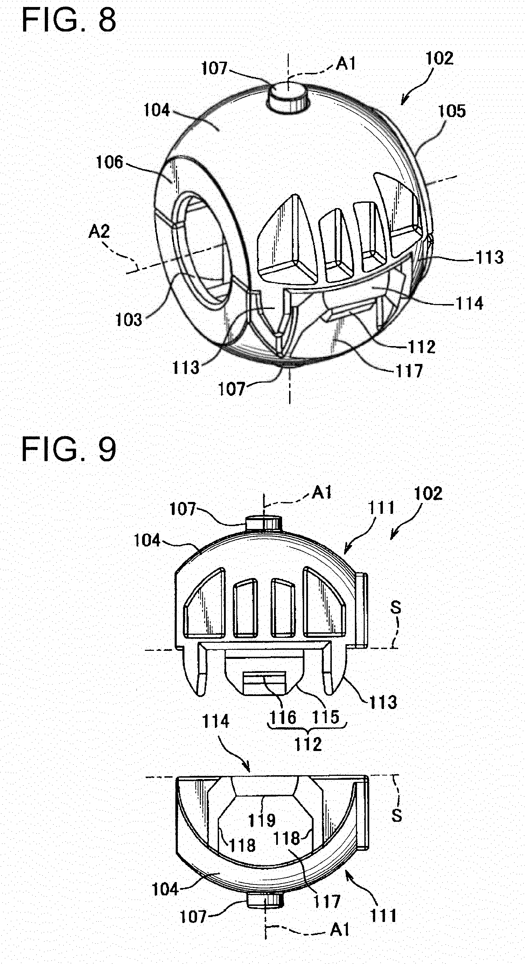

As shown in Fig. 7, an electric wire routing device described in Patent Literature 2 includes an outer member 101 fixed to a vehicle body, and an inner member 102 which is turnably supported by the outer member 101 and which holds an external member O of an electric wire W. The electric wire routing device swingably supports the electric wire W which is routed from a protector P on the side of a slide door toward the vehicle body. As shown also in Fig. 8 for example, the inner member 102 can vertically be divided and concentrically includes a circular harness insertion hole 103, and a rib which engages with a recess grove of the external member O is formed on an inner peripheral surface of the insertion hole 103. The inner member 102 includes a spherical surface portion 104 formed into a substantially spherical shape as a whole along an inner surface of the outer member 101, a front surface 105 and a back surface 106 having flat front and rear ends in an insertion direction of the electric wire W, and a pair of projections 107 projecting from the spherical surface portion 104. In the outer member 101, the inner member 102 can rotate in a rotation axis A1 extending along the pair of projections 107 and is supported such the inner member 102 can rotate around a rotation axis A2 which intersects with the pair of projections 107. That is, provided in the outer member 101 are a support surface 108 which slidably supports the spherical surface portion 104 of the inner member 102, and a ring-shaped groove 109 which rotatably and slidably supports the pair of projections 107. Since the inner member 102 is rotatably supported in the outer member 101 in this manner, the external member O held by the inner member 102 and the electric wire W inserted into the external member O are swingably supported, the electric wire W can follow the sliding motion of the slide door, and unnecessary stress is not applied to the electric wire W.

As shown also in Fig. 9, the inner member 102 is composed of a pair of divided bodies 111 which is combined with each other while sandwiching their own butt surfaces S, and the divided bodies 111 have the same configurations. Each of the divided bodies 111 includes a male lock portion 112 projecting from an outer edge of the spherical surface portion 104 toward the other divided body 111, a pair of projection pieces 113 projecting along a longitudinal direction of the male lock portion 112, and a female lock portion 114 located at an outer periphery on a side opposite from the male lock portion 112 and the projection pieces 113. The male lock portion 112 includes a plate-shaped base piece 115 projecting toward the other side more than the butt surface S, and an engaging projection 116 projecting from an outer surface of the base piece 115. The female lock portion 114 includes a flat surface portion 117 formed by notching the spherical surface portion 104 into a flat surface, a pair of arms 118 standing from the flat surface portion 117 and extending toward the other side, and an engaging piece 119 connecting tip ends of the arms 118 to each other. Therefore, by inserting the base piece 115 of the male lock portion 112 between the arms 118 of the female lock portion 114 and between the flat surface portion 117 and the engaging piece 119, and by engaging the engaging projection 116 with the engaging piece 119, the pair of divided bodies 111 is integrally fixed to each other while sandwiching their butt surfaces S, and the inner member 102 is assembled.

### Citation List

### Patent Literatures

Patent Literature 1: JP 2003-214561 A
Patent Literature 2: JP 2007-159217 A

### Summary of Invention

### Technical Problem

According to the conventional inner member 102 described in Patent Literature 2, however, since the male lock portion 112 projects from the butt surface S and the engaging projection 116 is provided on a tip end thereof, an engaging position between the engaging projection 116 and the engaging piece 119 of the female lock portion 114 is largely separated from the butt surface S. Hence, according to the conventional inner member 102, since it is necessary to provide the engaging position at an inner side of the spherical surface, the male lock portion 112 must be provided at a position secluded toward an inner side of the spherical surface in the radial direction thereof, and to secure a radial size of the external member O, it is necessary to secure a large diameter of the inner member 102. If the inner member 102 is increased in size in this manner, there is a problem that the outer member is also increased in size and this compresses a mounting space of in a vehicle.

Therefore, it is an object of the present invention to provide an electric wire routing device with which the device can be reduced in size and a mounting space for the device can be reduced.

### Solution to Problem

To achieve the above object, an electric wire routing device for routing an electric wire between a support body and a slide body described in one aspect of the present invention comprising: an outer member provided on either one of the support body or the slide body; and an inner member turnably supported in the outer member, in which the electric wire is inserted into the inner member, and the inner member guides the electric wire to the other of the support body or the slide body, an end of an external member provided along the electric wire and covering an outer periphery of the electric wire is held by the inner member, the inner member includes a spherical surface portion which is slidably supported by the outer member and which configures a portion of a spherical surface, a pair of shafts projecting from the spherical surface portion in mutually opposite directions in a radial direction of the electric wire routing device and supported by the outer member, and an insertion hole provided around a second axis intersecting with a first axis which passes through the pair of shafts, the electric wire is inserted through the insertion hole, the inner member further includes a holding portion provided in the inner member and holding the end of the external member, the inner member is configured by combining, with each other, a pair of inner divided bodies having the same shapes such that the inner divided bodies sandwich butt surfaces which intersects with the first axis at right angles and which include the second axis, each of the inner divided bodies includes a male lock portion provided on one side of a direction intersecting with the first axis and the second axis at right angles, and a female lock portion provided on the other side, the pair of inner divided bodies is connected to each other by engaging the male lock portions and the female lock portions with each other, and an engaged position between the male lock portion of one inner divided body of the pair of inner divided bodies and the female lock portion of the other inner divided body is closer to the one inner divided body than the butt surfaces.

According to a first preferred aspect of the present invention, in the electric wire routing device described in the one aspect of the present invention, the male lock portion includes a flat surface portion located radially inward of the spherical surface and intersecting with the butt surface, and an engaging projection projecting radially outward of the flat surface portion, the female lock portion includes a pair of arms extending along the spherical surface in a direction projecting from the butt surface, and an engaging piece connecting tip ends of the pair of arms to each other, and in a state where the engaging piece is made to climb over the engaging projection and the male lock portion and the female lock portion are engaged with each other, the engaged position is configured by abutting surfaces where the engaging projection and the engaging piece abut against each other.

According to a second preferred aspect of the present invention, in the electric wire routing device described in the first preferred aspect of the present invention, the engaging projection straddles the butt surface.

According to a third preferred aspect of the present invention, in the electric wire routing device described in any one of the preferred aspect of the present invention, each of the inner divided bodies includes a pair of restricting pieces provided adjacent to both sides of the male lock portion in a direction along the second axis, the pair of restricting pieces extends longer on the side of the other inner divided body than the male lock portion along the spherical surface, and the pair of restricting pieces can abut against both side surfaces of the female lock portion in the other inner divided body.

According to a fourth preferred aspect of the present invention, in the electric wire routing device described in any one of the preferred aspect of the present invention, a through hole penetrating the spherical surface portion is formed in the spherical surface portion of the inner divided body.

### Advantageous Effects of Invention

According to the invention described in the one aspect of the present invention, in the inner member configured by combining the pair of inner divided bodies with each other, the engaged position between the male lock portion of one inner divided body and the female lock portion of the other inner divided body is provided closer to the one inner divided body than the butt surface. Hence, it is unnecessary to make the male lock portion largely project toward the other inner divided body, and the engaged position can be provided in the vicinity of the butt surface. Therefore, the male lock portion provided on the inner side of the spherical surface can be formed in the vicinity of the spherical surface instead of at a radially secluded position. Hence, it is possible to minimize the outer diameter size of the inner member while securing the diameter of the insertion hole which is determined by the external member. The engaged position is provided in the vicinity of the butt surface, i.e., the engaged position is provided at a location where an outer diameter of a circle in which the spherical surface and a surface parallel to the butt surface intersect with each other at right angles becomes the maximum (curvature becomes minimum). Therefore, it becomes easy to secure the engagement strength between the male lock portion and the female lock portion and thus, it is possible to reduce width sizes of the male lock portion and the female lock portion along the spherical surfaces of thereof and depth sizes of these lock portions. Hence, it is possible to further reduce the outer diameter size of the inner divided body, and to minimize the longitudinal size of the inner divided body along the second axis.

According to the invention described in the first preferred aspect of the present invention, the male lock portion includes the flat surface portion and the engaging projection, the female lock portion includes the pair of arms and the engaging piece, and in the engaged state, the engaged position is configured by the abutting surfaces of the engaging projection and the engaging piece, and the abutting surfaces (engaged position) are provided in the vicinity of the butt surface. Hence, at least a portion of the male lock portion projects more than the butt surface, and at least a portion of the female lock portion projects more than the butt surface. That is, since both the male lock portion and the female lock portion are engaged with each other while exceeding the butt surface, it is possible to effectively exert a resisting force caused by engagement between the male lock portion and the female lock portion against a force acting in a direction separating, from each other, the pair of the inner divided bodies which sandwich the butt surfaces, and the engagement strength can be enhanced.

According to the invention described in the second preferred aspect of the present invention, since the engaging projection of the male lock portion straddles the butt surface, it is possible to reliably provide the engaged position at a location where a curvature of a circle in which the spherical surface and a surface parallel to the butt surface intersect with each other at right angles becomes the minimum, and it is possible to reliably reduce the sizes of the male lock portion and the female lock portion while securing the engagement strength.

According to the invention described in the third preferred aspect of the present invention, the pair of restricting pieces is provided adjacent to the male lock portion, and the pair of restricting pieces abuts against both the side surfaces of the female lock portion. According to this, it is possible to restrict relative movement between the male lock portion and the female lock portion concerning a direction along the second axis (longitudinal direction of inner member), and it is possible to further enhance the engagement strength between the inner divided bodies.

According to the invention described in the fourth preferred aspect of the present invention, since the through hole penetrating the spherical surface portion is formed, it is possible to visually check, from outside of the inner member, the external member of the electric wire which is inserted through the insertion hole and which is held by the holding portion, and it is possible to appropriately and reliably hold the external member.

### Brief Description of Drawings

Fig. 1 illustrates a perspective view of an inner member in an electric wire routing device according to an embodiment of the present invention.
Fig. 2 illustrates a side view showing the inner member.
Figs. 3A is a front view showing the inner member.
Figs. 3B is a rear view showing the inner member.
Fig. 4 illustrates a perspective view showing an inner divided body configuring the inner member.
Fig. 5 illustrates a front view showing the inner divided body.
Figs. 6A is a side view of one side showing the inner divided body.
Figs. 6B is a side view of the other side showing the inner divided body.
Fig. 7 illustrates a sectional view showing an electric wire routing device according to a conventional technique.
Fig. 8 illustrates a perspective view showing an inner member according to the conventional technique.
Fig. 9 illustrates an exploded side view of the inner member.

### Description of Embodiment

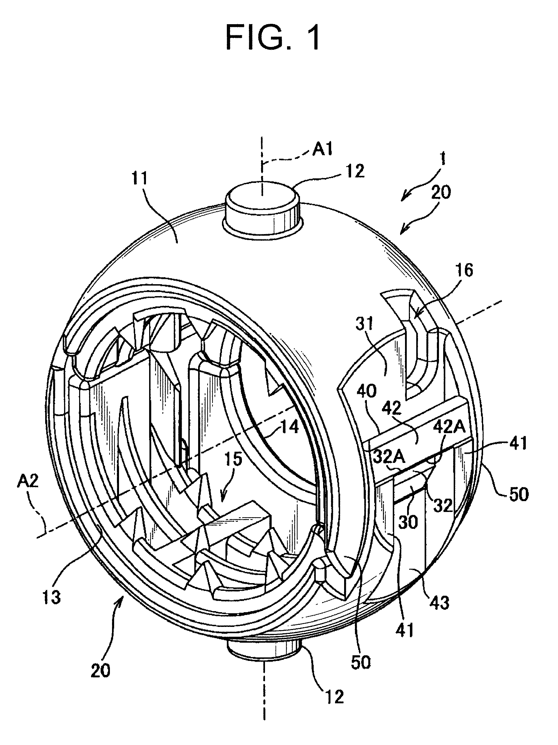

An electric wire routing device according to an embodiment of the present invention will be described using Figs. 1 to 6. The electric wire routing device of the embodiment routes an electric wire between a vehicle body and a slide door as a slide body for connecting, to each other, an electronic device provided on a vehicle body as a support body and an electronic device mounted on the slide door. The electric wire routing device includes an outer member (not shown) provided on the vehicle body, and an inner member 1 which is turnably supported in the outer member. An electric wire is inserted into the inner member 1, and the inner member 1 guides the electric wire to the slide door. An external member covers an outer periphery of the electric wire and an end of the external member is held by the inner member 1. The electric wire routing device swingably supports the external member and the electric wire. Since the electric wire, the external member and the outer member may be the same as those provided in the conventional electric wire routing device shown in Fig. 7, illustration thereof will be omitted.

The inner member 1 includes a spherical surface portion 11 which is swingably supported by a support surface of the outer member and which configures a portion of a spherical surface, a pair of shafts 12 which projects from the spherical surface portion 11 in mutually opposite directions in a radial direction of the electric wire routing device and which are supported by grooves of the outer member, and front and rear insertion holes 13 and 14 provided around a second axis A2 which intersects with a first axis A1 at right angles. The first axis A1 passes through the pair of shafts 12, and an electric wire is inserted through the insertion holes 13 and 14. The inner member 1 further includes a holding portion 15 which are provided inside of the insertion holes 13 and 14 and which holds an end of the external member, and a through hole 16 which penetrates the spherical surface portion 11. The external member is inserted through the insertion hole 13 on the side of a front surface of the inner member 1, the holding portion 15 holds the end of the external member in the inner member 1, the electric wire projecting from the external member is inserted through the insertion hole 14 on the side of a back surface, and is pulled out from the inner member 1. The inner member 1 is configured by combining a pair of inner divided bodies 20 having the same shapes. The inner divided bodies 20 sandwich butt surfaces S which intersect with the first axis A1 at right angles and which includes the second axis A2.

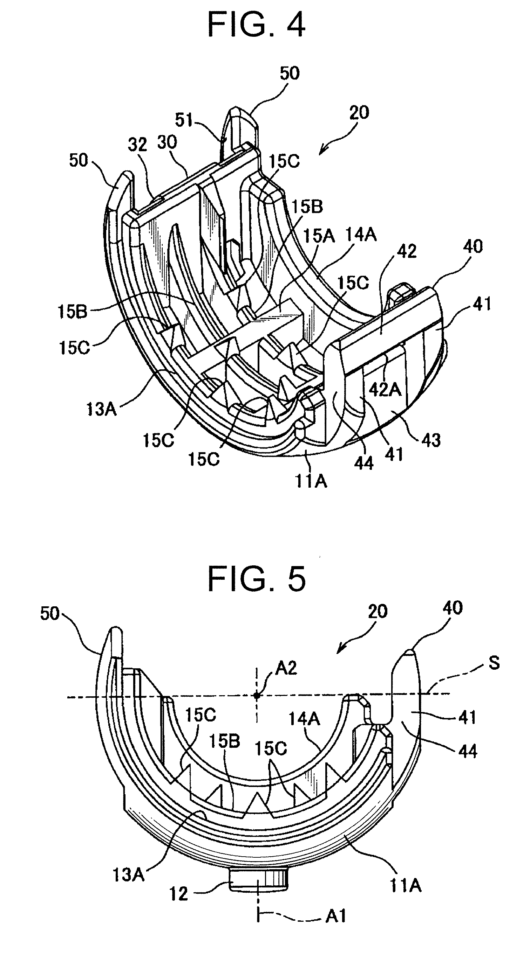

As shown in Figs. 4 to 6, each of the pair of inner divided bodies 20 includes a semi-spherical surface portion 11A configuring a substantially half portion of the spherical surface portion 11, and semi-circular portions 13A and 14A configuring substantially half portions of the insertion holes 13 and 14. The holding portion 15 is composed of a vertical rib 15A projecting from an inner surface of the semi-spherical surface portion 11A along the second axis A2, lateral ribs 15B projecting from the inner surface of the semi-spherical surface portion 11A along a circumferential direction, and holding projections 15C which further project from the vertical rib 15A and the lateral ribs 15B. The lateral ribs 15B and the holding projections 15C mesh with grooves formed in a surface of a corrugated tube as the external member and according to this, an end of the corrugated tube is held by the holding portion 15. It is possible to visually check from outside of the inner member 1 through the through hole 16 whether the end of the corrugated tube is appropriately held by the holding portion 15.

Each of the inner divided bodies 20 includes a male lock portion 30 provided on one side (left side in Fig. 5) in a radial direction (direction intersecting with first axis A1 and second axis A2 at right angles) along the butt surface S, a female lock portion 40 provided on the other side (right side in Fig. 5), and a pair of restricting pieces 50 provided adjacent to each other on both sides of the male lock portion 30. The male lock portion 30 includes a flat surface portion 31 located on a radially inner side of the semi-spherical surface portion 11A and intersecting with the butt surface S at right angles, and an engaging projection 32 projecting radially outward of the flat surface portion 31. The female lock portion 40 includes a pair of arms 41 which is continuous from the semi-spherical surface portion 11A and which extends in a direction projecting from the butt surface S, an engaging piece 42 which connects tip ends of the pair of arms 41 to each other, and a retracting surface 43 located radially inward of the semi-spherical surface portion 11A and between the pair of arms 41. The pair of restricting pieces 50 extends longer than the male lock portion 30 along the spherical surface. A distance between inner surfaces 51 of the pair of restricting pieces 50 is set substantially equal to a distance between outer surfaces 44 of the pair of arms 41 in the female lock portion 40.

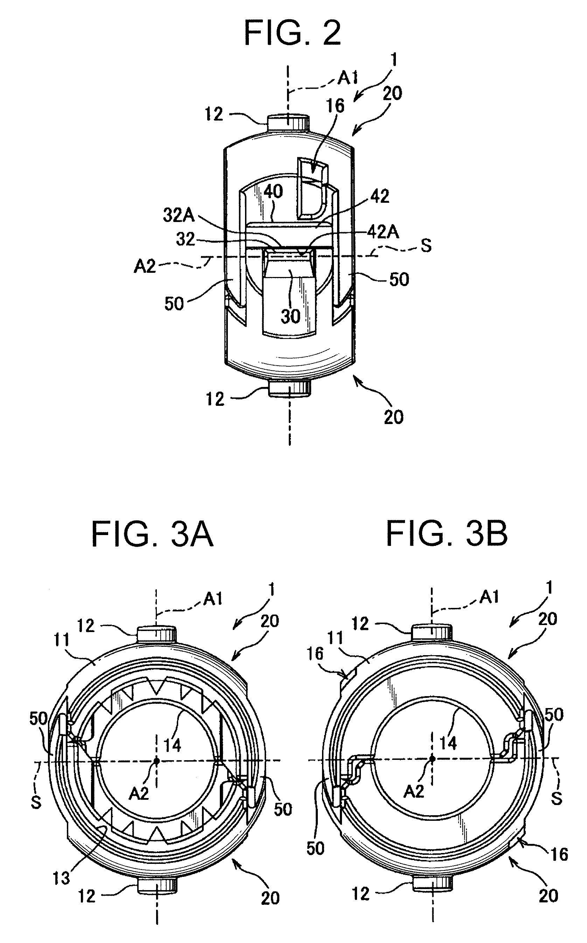

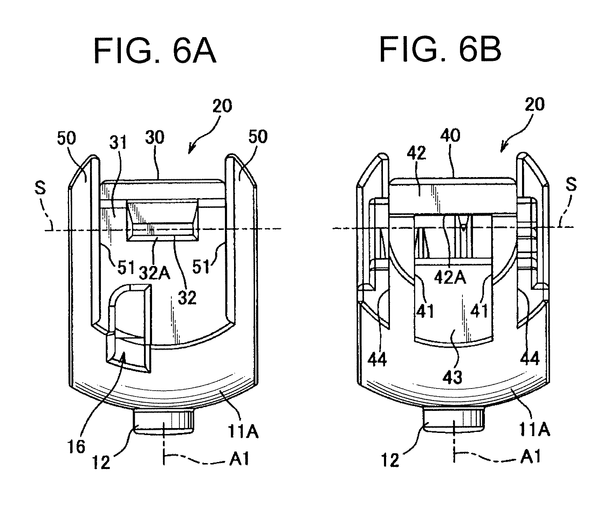

In the above-described pair of inner divided bodies 20, the engaging piece 42 in the female lock portion 40 of the other inner divided body 20 is made to climb over the engaging projection 32 in the male lock portion 30 of one inner divided body 20, and an abutting surface 32A of the engaging projection 32 and an abutting surface 42A of the engaging piece 42 are made to abut against each other, thereby maintaining engagement between the male lock portion 30 and the female lock portion 40. In this engaged state, an engaged position between the male lock portion 30 and the female lock portion 40 is an abutted position between the abutting surfaces 32A and 42A thereof. As shown in Fig. 2, this abutted position is in the vicinity of the butt surface S and is located on the side closer to one inner divided body 20 than the butt surface S (on side of base end of male lock portion 30). That is, the engaging projection 32 of the male lock portion 30 straddles the butt surface S as shown in Fig. 6A, and its abutting surface 32A is provided at a position not projecting from the butt surface S (at position below butt surface S in Figs. 6A and 6B). As shown in Fig. 6B, the engaging piece 42 and the abutting surface 42A of the female lock portion 40 are provided at positions projecting from the butt surface S (at positions above butt surface S in Figs. 6A and 6B).

According to the above-described embodiment, the engaged position between the male lock portion 30 and the female lock portion 40, i.e., the abutted position between the abutting surface 32A of the engaging projection 32 and the abutting surface 42A of the engaging piece 42 is in the vicinity of the butt surface S. Therefore, it is possible to minimize an outer diameter size and a depth side of the inner member 1 while securing a diameter of the insertion hole 13 which is determined by the external member. That is, since a diameter of a circle in which a spherical surface and a surface parallel to the butt surface S intersect with each other at right angles becomes the maximum in the vicinity of the butt surface S, a distance between the spherical surface and the external member inserted into the insertion hole 13 becomes the maximum. If the male lock portion 30 and the female lock portion 40 are engaged with each other at this position, it is possible to minimize the outer diameter size and the depth side of the inner member 1 while securing sizes of the male lock portion 30 and the female lock portion 40 which are necessary for obtaining engagement strength. Therefore, the outer member which accommodates and supports the inner member 1 can be reduced in size, and a mounting space for mounting the electric wire routing device can be reduced.

Further, both the male lock portion 30 and the female lock portion 40 are engaged with each other while exceeding the butt surface S, it is possible to effectively exert a resisting force caused by engagement between the male lock portion 30 and the female lock portion 40 against a force acting in a direction separating, from each other, the pair of the inner divided bodies 20 which sandwiches the butt surfaces S, and the engagement strength can be enhanced. Further, since the inner surfaces 51 of the pair of restricting pieces 50 abut against the outer surfaces 44 of the arms 41 of the female lock portion 40, it is possible to restrict relative movement between the male lock portion 30 and the female lock portion 40, and it is possible to further enhance the engagement strength between the inner divided bodies 20.

The above-described embodiment only shows a typical example of the present invention, and the invention is not limited to the embodiment. That is, the invention can variously be modified within a scope not departing from essential features of the invention.

For example, although the electric wire routing device is applied to the automobile in the embodiment, the electric wire routing device of the invention is not limited to the automobile, and can be applied to various devices and structures. In the automobile also, the invention is not limited to the slide door, and the invention can be applied for routing electric wires not only for the slide door, but also for various kinds of slide bodies such as a slide seat. Of the support body (vehicle body) and the slide body (slide door), the support body is provided with the electric wire routing device (outer member and inner member 1) of the present invention in the embodiment, but the slide body may be provided with the electric wire routing device of the invention, or both the support body and the slide body may be provided with the electric wire routing devices. In the invention, the inner member 1 may not provided with the through hole 16, and the holding portion 15 is not limited to the holding portion having the holding projection 15C, and the holding portion 15 may include at least the lateral rib 15B.

### Reference Signs List

- 1: inner member
- 11: spherical surface portion
- 12: axis
- 13, 14: insertion hole
- 15: holding portion
- 16: through hole
- 20: inner divided body
- 30: male lock portion
- 31: flat surface portion
- 32: engaging projection
- 32A: abutting surface
- 40: female lock portion
- 41: arm
- 42: engaging piece
- 42A: abutting surface
- A1: first axis
- A2: second axis
- S: butt surface

## Claims

1. An electric wire routing device for routing an electric wire between a support body and a slide body, comprising:
an outer member provided on either one of the support body or the slide body; and
an inner member turnably supported in the outer member, in which the electric wire is inserted into the inner member, and the inner member guides the electric wire to the other of the support body or the slide body, an end of an external member provided along the electric wire and covering an outer periphery of the electric wire is held by the inner member,
the inner member includes a spherical surface portion which is slidably supported by the outer member and which configures a portion of a spherical surface, a pair of shafts projecting from the spherical surface portion in mutually opposite directions in a radial direction of the electric wire routing device and supported by the outer member, and an insertion hole provided around a second axis intersecting with a first axis which passes through the pair of shafts, the electric wire is inserted through the insertion hole, the inner member further includes a holding portion provided in the inner member and holding the end of the external member, the inner member is configured by combining, with each other, a pair of inner divided bodies having the same shapes such that the inner divided bodies sandwich butt surfaces which intersects with the first axis at right angles and which include the second axis,
each of the inner divided bodies includes a male lock portion provided on one side of a direction intersecting with the first axis and the second axis at right angles, and a female lock portion provided on the other side, the pair of inner divided bodies is connected to each other by engaging the male lock portions and the female lock portions with each other, and
an engaged position between the male lock portion of one inner divided body of the pair of inner divided bodies and the female lock portion of the other inner divided body is closer to the one inner divided body than the butt surfaces.

2. The electric wire routing device according to claim 1, wherein the male lock portion includes a flat surface portion located radially inward of the spherical surface and intersecting with the butt surface, and an engaging projection projecting radially outward of the flat surface portion,
the female lock portion includes a pair of arms extending along the spherical surface in a direction projecting from the butt surface, and an engaging piece connecting tip ends of the pair of arms to each other, and
in a state where the engaging piece is made to climb over the engaging projection and the male lock portion and the female lock portion are engaged with each other, the engaged position is configured by abutting surfaces where the engaging projection and the engaging piece abut against each other.

3. The electric wire routing device according to claim 2, wherein the engaging projection straddles the butt surface.

4. The electric wire routing device according to any one of claims 1 to 3, wherein each of the inner divided bodies includes a pair of restricting pieces provided adjacent to both sides of the male lock portion in a direction along the second axis, the pair of restricting pieces extends longer on the side of the other inner divided body than the male lock portion along the spherical surface, and the pair of restricting pieces can abut against both side surfaces of the female lock portion in the other inner divided body.

5. The electric wire routing device according to any one of claims 1 to 4, wherein a through hole penetrating the spherical surface portion is formed in the spherical surface portion of the inner divided body.
